**Europäisches Patentamt**

**European Patent Office**

**Office européen des brevets**

(19)

(11) Veröffentlichungsnummer : **0 433 222 B1**

# (12) EUROPÄISCHE PATENTSCHRIFT

(45) Veröffentlichungstag der Patentschrift :
**03.11.93 Patentblatt 93/44**

(21) Anmeldenummer : **90810902.8**

(22) Anmeldetag : **22.11.90**

(51) Int. Cl.⁵ : **B01J 19/32,** B01J 35/04

(54) **Reaktor für heterogene Reaktionsführung mit Katalysatorkörper.**

(30) Priorität : **11.12.89 CH 4446/89**

(43) Veröffentlichungstag der Anmeldung :
**19.06.91 Patentblatt 91/25**

(45) Bekanntmachung des Hinweises auf die
Patenterteilung :
**03.11.93 Patentblatt 93/44**

(84) Benannte Vertragsstaaten :
**CH DE FR GB IT LI NL**

(56) Entgegenhaltungen :
**EP-A- 0 025 308**
**EP-A- 0 208 929**
**DE-A- 2 205 371**
**DE-A- 3 826 155**
**DE-U- 8 700 639**

(73) Patentinhaber : **GEBRÜDER SULZER**
**AKTIENGESELLSCHAFT**
**Zürcherstrasse 9**
**CH-8401 Winterthur (CH)**

(72) Erfinder : **Stringaro, Jean-Paul, Dr.**
**Feldstrasse 18**
**CH-8180 Bülach (CH)**

EP 0 433 222 B1

EP 0 433 222 B1

## Beschreibung

Die Erfindung betrifft einen Reaktor für heterogene Reaktionsführung mit einer Reaktorwandung, mindestens einem Einlauf und einem Auslauf, einer zugeordneten Fördereinrichtung und mit einem Katalysatorkörper als Packung. Derartige katalytische Reaktoren sind bekannt z.B. Ein- oder Mehrrohrreaktoren, wobei als Katalysatorkörper Schüttungen oder Monolithe, meist aus extrudierten Strukturen mit parallelen Kanälen, oder aufgerollte Wellstrukturen, meist aus beschichtetem Blech, Verwendung finden. Diese bekannten Reaktoren weisen aber erhebliche Nachteile auf. So treten bei Schüttungen hohe Druckabfälle und schlechte Wärmeableitung auf. Monolithe und gewickelte Wellstrukturen weisen keine radiale Vermischung auf, die Wärmeabfuhr ist schlecht und es treten Schlupf, inhomogene Konzentrations- und Temperaturprofile auf. In der CH-PS 537 208 wurde auch schon die Möglichkeit erwähnt, eine statische Mischerstruktur mit katalytisch aktiven Material zu versehen. Dies ist jedoch insbesondere für katalytische Reaktionen mit signifikanter Wärmetönung auch nicht geeignet, da die notwendige Wärmeableitung nicht erreicht und auch der erforderliche Temperaturbereich für eine gegebene katalytische Reaktion nicht eingehalten werden kann. Bei den bekannten Reaktoren tritt auch die Gefahr hoher Spitzentemperaturen und von lokalen "hot spots" auf.

Aufgabe der Erfindung ist es, einen Reaktor zu schaffen, welcher diese Nachteile weitgehend überwindet und insbesondere geringen Druckabfall, gute radiale Vermischung, dadurch homogene Konzentrations- und Temperaturprofile, gute Wärmeabfuhr und reduzierte Spitzentemperaturen aufweist und welcher katalytische Reaktionen mit hoher Effizienz und guter Selektivität ermöglicht. Auch soll ein scale-up von Laboreinheiten auf grössere Produktionseinheiten einfacher möglich sein.

Diese Aufgabe wird erfindungsgemäss gelöst durch einen Reaktor mit den Merkmalen von Anspruch 1. Durch die von den Stromleitelementen gebildeten Teilstromkanäle mit Neigungswinkel W zur Hauptstromrichtung wird über die Höhe einer Stufe des Katalysatorkörpers eine rasche Ableitung der katalytischen Wärmetönung an die wärmeleitende Reaktorwandung erreicht. Dazu ist die Höhe einer Stufe so gross gewählt, dass deren Versetzungsfaktor H/H0 mindestens 1/2 beträgt. Dadurch führt von jeder Stelle einer Stufe mindestens ein Teilstromkanal bis an die Reaktorwandung. Gleichzeitig wird durch die abwechselnde Anordnung der Teilstromkanäle bzw. der Stromleitelemente in zwei verschiedenen Richtungen mit dazwischenliegenden teilweise offenen Stromkreuzungsstellen bei geringem Druckabfall eine gute radiale Vermischung und damit homogene Konzentrations- und Temperaturprofile erreicht. Die abhängigen Ansprüche beziehen sich auf besonders vorteilhafte Ausführungsformen und Weiterentwicklungen der Erfindung. Eine direkt an der Reaktorwandung angebrachte Kühl- oder Heizvorrichtung sowie eine Steuerungseinheit, welche mit dieser Kühl- oder Heizvorrichtung und mit der Fördereinrichtung verbunden ist, können eine optimale Einstellung und den Betrieb unter optimalen Bedingungen einer gewünschten katalytischen Reaktion ermöglichen. Durch die Ausbildung der Stromkreuzungsstellen, so dass deren offene Flächen kleiner sind als die Querschnittsflächen der Teilstromkanäle bzw. weniger als die Hälfte der Fläche der Lagenebenen beträgt, kann gleichzeitig eine gute Vermischung und Homogenisierung im ganzen Reaktorraum und eine hohe Wärmeabfuhr an die Reaktorwände weiter optimiert werden. Geeignete Stromleitelemente und Teilkanäle können gebildet werden aus wellenförmigen Schichten und mit abgerundeten, dreieckförmigen, rechteckförmigen, quadratischen oder trapezförmigen Querschnittsformen der Teilkanäle. Wenn sich die Stromleitelemente in den Lagenebenen über einem bestimmten Teilstück berühren, kann auch erhöhte Wärmeableitung an die Wand erreicht werden. Günstige Ausführungen der Stromleitelemente können aus einem wärmeleitenden Metallskelett mit zusätzlich verbesserter Wärmeableitung und Beschichtungen aus Erdalkali- oder Uebergangsmetalloxyden, im speziellen mit Aluminiumoxyd, bestehen. Sie können auch Schichten aus Vollkeramikmaterial und einfach herzustellende Washcoat-Beschichtungen aufweisen. Gute Reaktionsverhältnisse können mit spezifischen Oberflächen von 20 bis 200 m²/g (BET-Oberfläche des Katalysatorträgermaterials oder des Katalysators) und Oberflächenvergrösserungen von 100 bis 100 000 m²/m² (BET-Fläche/geometrische Substratfläche) erreicht werden. Durch Aufteilung des Reaktorkörpers in mindestens zwei Abschnitte mit unterschiedlichen Parameterwerten kann eine weitere Optimierung des Reaktionsverlaufs über die Reaktorlänge erreicht werden. Der Katalysatorkörper samt umgebender Wandung kann aber auch aus mehreren gleichartigen Moduln zusammengesetzt sein, was besonders günstige Transport- und Montage-Bedingungen ergibt.

Im folgenden wird die Erfindung anhand von Beispielen und Figuren näher erläutert. Es zeigt:

Fig. 1 einen erfindungsgemässen Reaktor mit zwei Stufen des Katalysatorkörpers;
Fig. 2 schematisch den Versetzungsfaktor H/H0 einer Stufe;
Fig. 3a, b eine räumliche Anordnung von Stromleitelementen und Teilstromkanälen im Reaktorraum und bezüglich der Hauptströmungsrichtung Z;
Fig. 4 verschiedene mögliche Querschnittsformen der Teilstromkanäle;
Fig. 5 die Flächenverhältnisse in den Lagenebenen der Beispiele von Fig. 4;
Fig. 6 die Wirkungsweise bezüglich Homogenisierung und Wärmeableitung resultierend aus den

2

Flächenverhältnissen;

Fig. 7          Temperatur- und Konzentrationsverläufe im Vergleich mit bisherigen Reaktoren;

Fig. 8          ein Beispiel mit zwei Abschnitten des Katalysatorkörpers;

Fig. 9          ein Beispiel in Modulbauweise;

Fig. 10        den Aufbau von Stromleitelementen mit Katalysator.

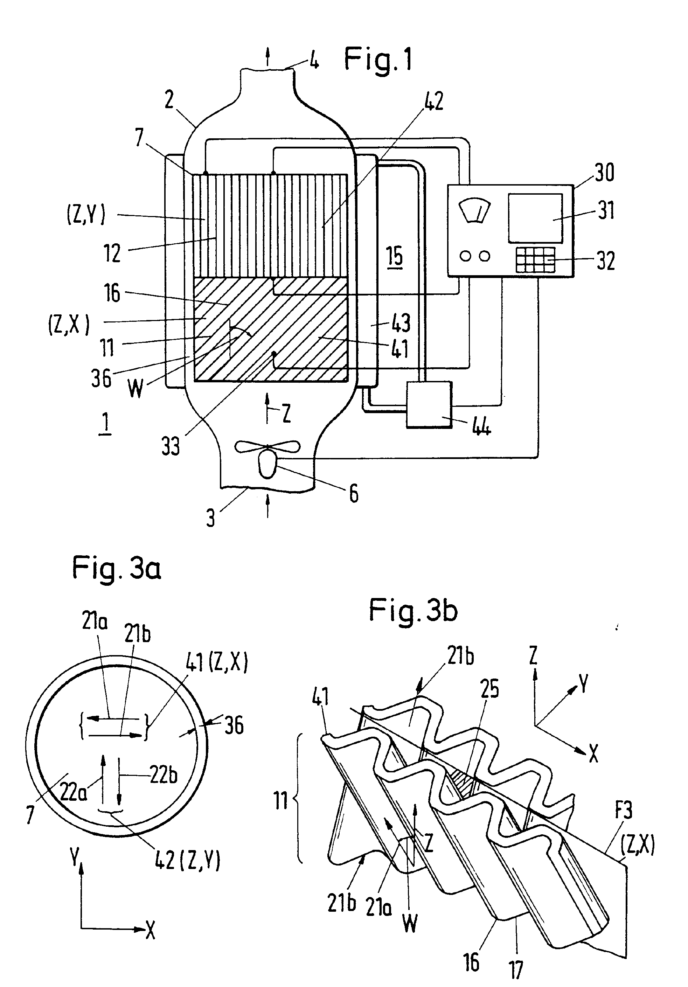

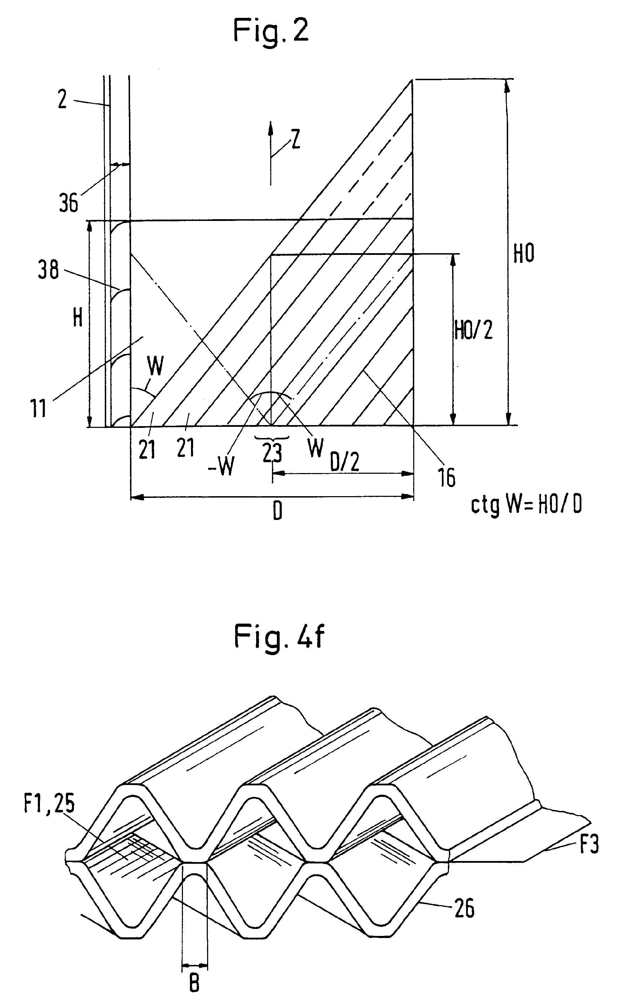

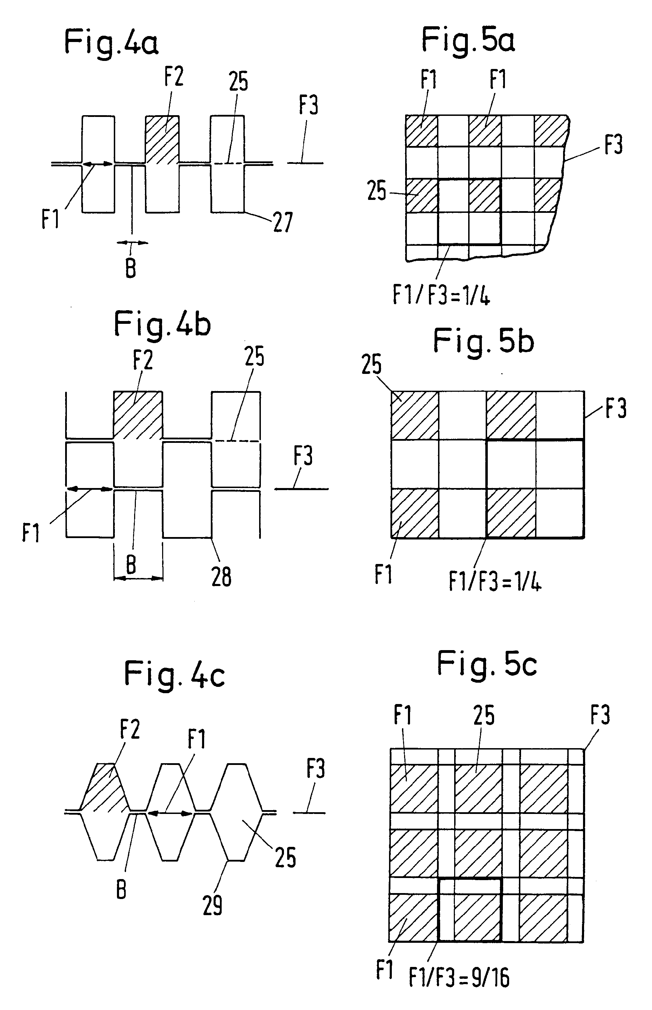

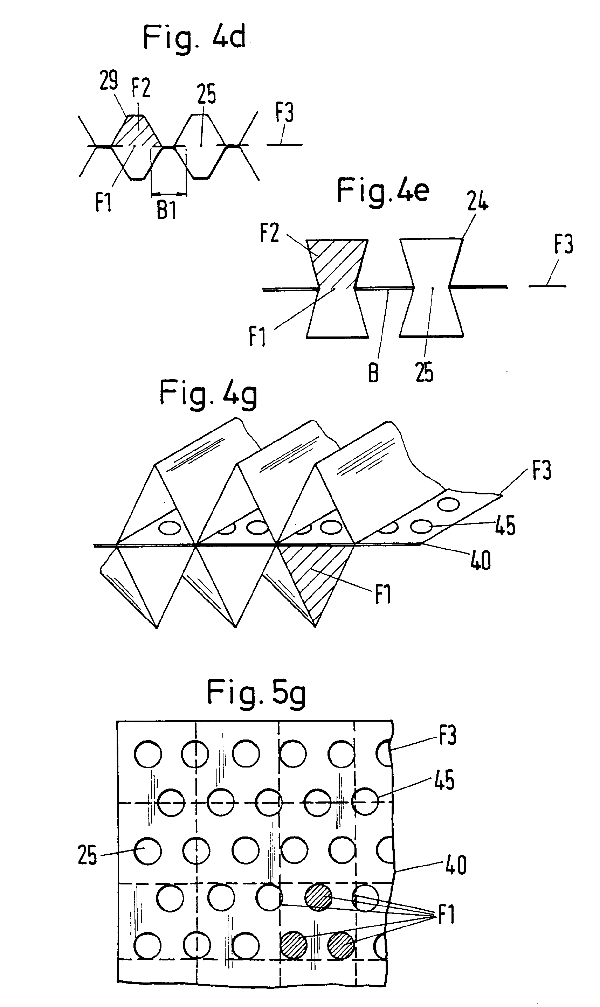

Der erfindungsgemässe Reaktor 1 für flüssige oder gasförmige Medien von Fig. 1 weist eine Reaktorwandung 2, einen Einlauf 3, einen Auslauf 4, eine zugeordnete Fördereinrichtung 6, z.B. als Pumpe oder Gebläse, und einen Katalysatorkörper 7 als Packung auf. Dieser Katalysatprkörper besteht hier aus zwei Stufen 11, 12, welche je aus in parallelen Lagen 41, 42 angeordneten und Teilstromkanäle 21, 22 bildenden Stromleitelementen 16 bestehen. Deren räumliche Anordnung bezüglich der Hauptströmungsrichtung Z und der Raumachsen X,Y,Z verdeutlicht Fig. 3. Nach Fig. 3a liegen die Strömungskanäle 21 der Lagen 41 parallel zur Ebene (Z,X) und die Strömungskanäle 22 der Lagen 42 parallel zur Ebene (Z,Y). Alle Stromleitelemente bzw. die gebildeten Teilstromkanäle 21, 22 sind in einem Neigungswinkel W von mindestens 10°, vorzugsweise von 35° bis 65° zur Strömungsrichtung Z angeordnet. Dabei sind die Lagen abwechselnd in Richtung +W und -W ausgerichtet, so dass sich kreuzende Teilströme 21a, 21b in der Ebene (Z,X) gebildet werden. In der Ebene (Z,Y) sind die Strömungsrichtungen 22a, 22b ebenfalls im Winkel W zur Z-Achse ausgerichtet. Durch diese Anordnung werden teilweise offene Stromkreuzungsstellen 25 zwischen den Teilstromkanälen gebildet (Fig. 4, 5), an welchen eine dosierbare, partielle Vermischung stattfindet. Der Katalysator ist mindestens an der Oberfläche der Stromleitelemente 16 angebracht, in Fig. 3b auf den wellenförmigen Schichten 17.

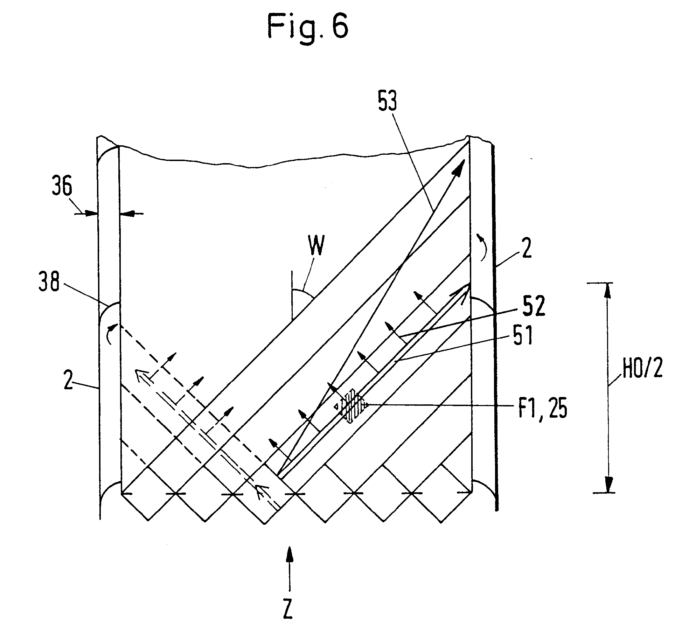

Die durch den Versetzungsfaktor $H/H0$ bestimmte Höhe H einer Stufe 11 des Katalysatorkörpers wird nach Fig. 2 erläutert. Die Höhe H0, über welcher ein Teilstromkanal den ganzen Reaktorkörper mit Durchmesser bzw. Dicke D durchquert, ist gegeben durch $H0 = D \cdot ctg\, W$. Damit von jeder Stelle des ganzen Strömungsquerschnitts eingangs einer Stufe 11 immer mindestens ein Teilstrom ganz bis an die wärmeleitende Reaktorwandung 2 führt, muss dies auch für den von der Mitte ausgehenden Kanal 23 gelten. Die minimale Stufenhöhe H muss dann sein: $H = 1/2\, HO$, somit also der Versetzungsfaktor $H/HO$ mindestens $= 1/2$ sein. Dies ist auch aus der Fig. 6 ersichtlich: Dort führt immer mindestens ein Teilstrom bis an die Reaktorwandung, entweder der nach rechts verlaufende Teilstrom (51) oder der diesen kreuzende, nach links verlaufende Teilstrom, welcher gestrichelt eingezeichnet ist.

Der Reaktor von Fig. 1 weist auch eine an der Reaktorwand 2 angebrachte bzw. auf diese einwirkende Kühl- oder Heizvorrichtung 15 auf, sowie eine mit der Vorrichtung 15 und der Fördereinrichtung 6 verbundene Steuerungseinheit 30. Die Heiz-/Kühlvorrichtung 15 kann z.B. eine Luft- oder Wasserkühlung oder auch eine elektrische Heizung für endotherme Reaktionen aufweisen. Hier ist am Reaktor ein Kühlmantel 43 und damit verbunden ein Wärmetauscher 44 vorgesehen, wobei mit der Steuerungseinheit 30 die Kühlleistung über den Wärmetauscher 44 eingestellt und gesteuert wird. Sensoren 33 für Temperaturen, pH-Werte oder Konzentrationen erfassen an verschiedenen Stellen des Reaktorraums relevante Reaktionsparameter. Mit einem Programmteil 31 und einer Dateneingabe 32 der Steuerungseinheit können somit Reaktionsabläufe nach Wunsch programmiert, optimiert, überwacht und automatisiert werden.

Durch die Ausgestaltung der Querschnittsformen der Teilkanäle, der offenen Flächen der Stromkreuzungsstellen 25, des Neigungswinkels W und der Stufenhöhe H kann, abgestimmt auf Strömungsgeschwindigkeit, Medium und Wärmetönung der Reaktion, sowohl eine gute Quervermischung mit homogenen Konzentrationsverläufen als auch eine rasche Wärmeableitung über die Reaktorwandung und damit eine optimale Reaktionsführung erreicht werden.

Die Figuren 4a bis 4f zeigen schematisch verschiedene Beispiele möglicher geeigneter Querschnittsformen mit Flächen F2 der durch die Stromleitelemente gebildeten Teilkanäle. Dies sind in Fig. 4a rechteckförmige (27), in Fig. 4b quadratische (28), in Fig. 4c bis 4e trapezförmige (24, 29) und in Fig. 4f gerundet dreieckförmige (26) Querschnitte. Fig. 3b gibt ein weiteres Beispiel mit gerundeter Querschnittsform. Wie gezeigt, berühren sich die Stromleitelemente in den Lagenebenen über einem bestimmten Teilstück B, wodurch die offene Fläche F1 der Stromkreuzungsstellen 25 entsprechend verkleinert wird.

In den Figuren 5a, b, c, g sind den Beispielen von Fig. 4a, b, c, g entsprechend die offenen Flächen F1 und die geschlossenen Flächenanteile in den Lagenebenen F3 gezeigt. In den Lagenebenen berühren sich je zwei Lagen von Stromleitelementen bzw. sie sind hier verbunden. Die den Stromkreuzungsstellen 25 entsprechenden offenen Flächen F1 sind schraffiert dargestellt. Wie ersichtlich, kann je nach Formgebung der Stromleitelemente ein gewünschtes Verhältnis von offenen Flächen F1 zu gesamter Lagenfläche F3 erzielt werden. Ebenso kann auch ein geeignetes Verhältnis von offenen Flächen F1 zu Querschnittsflächen F2 der Teilstromkanäle eingestellt werden. Mit $W = 45°$ und ohne Berücksichtigung der endlichen Schichtdicke der Stromleitelemente ergeben sich beispielsweise für die Verhältnisse $F1/F2$ und $F1/F3$ folgende Werte:

EP 0 433 222 B1

| | | | | | |
|---|---|---|---|---|---|
| Fig. 4a | F1/F2 | = 2/3 | F1/F3 | = 1/4 |
| Fig. 4b | " | = 1 | " | = 1/4 |
| Fig. 4c | " | = 3/2 | " | = 9/16 |
| Fig. 4d | " | = 1 | " | = 1/4 |
| Fig. 4e | " | = 4/9 | " | = 1/9 |

Mit vergrössertem B1 erreicht die Form von 4d gleiche Werte wie die quadratische von 4b.

Eine Reduktion bzw. Optimierung der Flächenverhältnisse F1/F2 und F1/F3 kann aber auch erreicht werden durch Einfügen von Zwischenschichten 40 in den Lagenebenen zwischen den Lagen 41, 42, wobei die Zwischenschichten den Flächen F1 entsprechende Durchtrittsöffnungen 45 aufweisen. Die Zwischenschichten können z.B. aus gestanzten Blechen einfach hergestellt und mit den Lagen 41, 42 zu Stufen des Katalysatorkörpers zusammengestellt werden. Dabei müssen die Durchtrittsöffnungen der Zwischenschichten nicht notwendigerweise genau auf die Lage der Kanäle ausgerichtet sein und sie können auch eine andere oder gar keine Periodizität aufweisen. Die Figuren 4 g und 5 g zeigen eine derartige Anordnung mit dreieckförmigem Querschnitt und rund gelochten Zwischenschichten 40.

Mit diesen Flächenverhältnissen F1/F2 und F1/F3 wird der Vermischungsanteil zwischen Kanälen benachbarter Lagen eingestellt.

Vorteilhaft ist oft:  F1/F2 $\leqslant$ 1,   mindestens aber $\leqslant$ 1,5

und  F1/F3 $\leqslant$ 1/2, mindestens aber $\leqslant$ 0,7.

Wie in Fig. 6 schematisch dargestellt, ergibt dies an jeder Stromkreuzungsstelle eine in einem Teilstromkanal verbleibende Längskomponente des Mediumstroms als Hauptkomponente 51 und eine in benachbarte Querkanäle übergehende Querkomponente 52. Die Flächenverhältnisse werden in Bezug auf den Versetzungsfaktor H/H0 so eingestellt, dass sowohl eine hinreichende Quervermischung und Konzentrations-Homogenisierung als gleichzeitig auch eine gute Wärmeableitung an die Reaktorwand durch die Hauptkomponente. Günstige Verhältnisse können erreicht werden, wenn die Summe der Querkomponenten 52 in der gleichen Grössenordnung liegt wie die Hauptkomponente 51. Im Gegensatz zu bekannten statischen Mischerstrukturen wird beim erfindungsgemässen Reaktor also nicht eine maximale Vermischungswirkung in Querrichtung erzeugt, sondern ganz im Gegenteil eine signifikant eingeschränkte Quermischung zur Optimierung der Hauptkomponente eingestellt. Querkomponenten und Hauptkomponenten ergeben somit zusammen einen Verlauf der strömenden Teilchen im Reaktorraum im wesentlichen gemäss Richtung der Resultierenden 53; d.h. alle Teilchen können im Prinzip an die Reaktorwandung 2 geführt werden. Speziell für hohe Wärmetönungen kann dazu der Versetzungsfaktor H/H0 mindestens gleich 0.7 gewählt werden. Je nach katalytischer Reaktion kann aber auch schon 0.5 genügen.

Der Randspalt 36 liegt vorzugsweise in der gleichen Grössenordnung wie der hydraulische Durchmesser der Teilstromkanäle. Kragenartige Abschlüsse 38 im Randspalt 36 leiten nach Wärmeaustausch an der Wand 2 das Reaktionsgemisch wieder in die Kanäle zurück. Dazu sind über jeder Stufe des Reaktorkörpers mindestens einer, vorzugsweise jedoch mehrere Kragen 38 angeordnet.

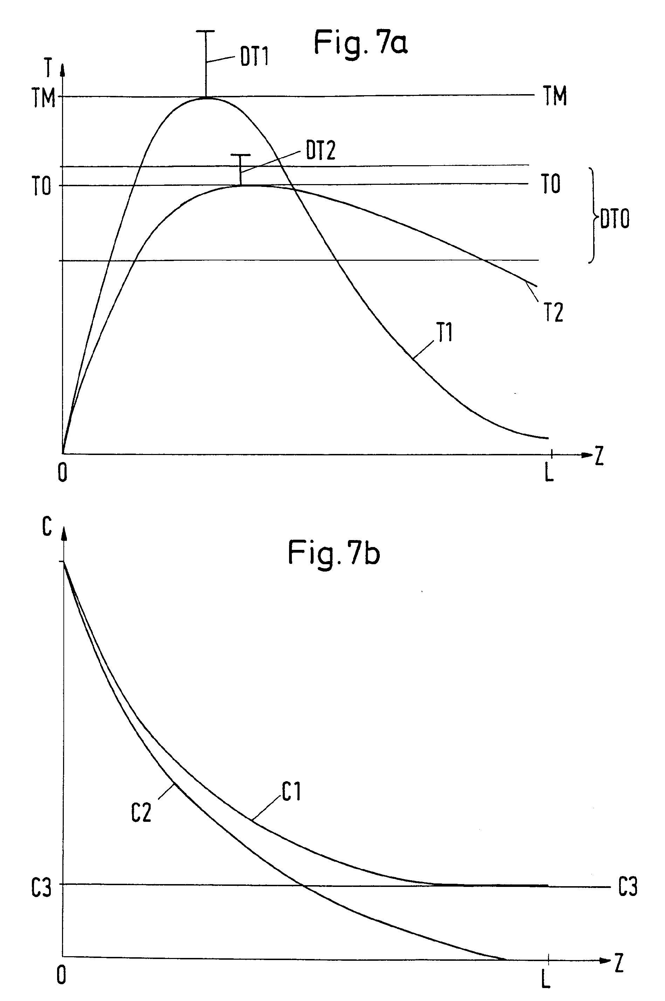

Die Figuren 7a und b zeigen an einem Beispiel schematisch den Verlauf der Temperaturen T bzw. der katalytisch abzubauenden Konzentration C über die Reaktorlänge L in Hauptströmungsrichtung Z. Mit bisherigen Reaktoren wird ein Temperaturverlauf T1 mit raschem Anstieg auf hohe Temperaturen bis zur zulässigen maximalen Temperatur TM und anschliessendem relativ raschem Abfallen erreicht. Mit dem erfindungsgemässen Reaktor dagegen steigt die Temperatur T2 bei gleicher Reaktionsintensität infolge effizienter Wärmeableitung nur bis zum gewünschten optimalen Wert TO und fällt anschliessend dank guter Homogenisierungswirkung auch weniger rasch ab, bleibt also wesentlich länger im optimalen Bereich DTO. Ueberdies sind lokale Temperaturspitzen und Inhomogenitäten DT2 klein infolge gezielter Misch- und Homogenisierungswirkung. Bei bisherigen Reaktoren jedoch treten grosse lokale Temperaturspitzen und Inhomogenitäten DT1 auf, welche die zulässige maximale Temperatur TM überschreiten und dadurch zu unerwünschten chemischen Reaktionen und zu Katalysator-Zerstörung führen können. Im Konzentrationsverlauf C(Z) in Fig. 7b zeigen bisherige Reaktoren mit C1 eine raschere Abflachung der Reaktion mit einem als Schlupf verbleibenden unerwünschten Restwert C3 am Ende L des Katalysatorkörpers. Die Konzentration C2 des erfindungsgemässen Reaktors

4

nimmt dagegen zügig und kontinuierlich bis zum Wert 0 ab, ohne dass am Ende L des Katalysatorkörpers ein Schlupf auftritt.

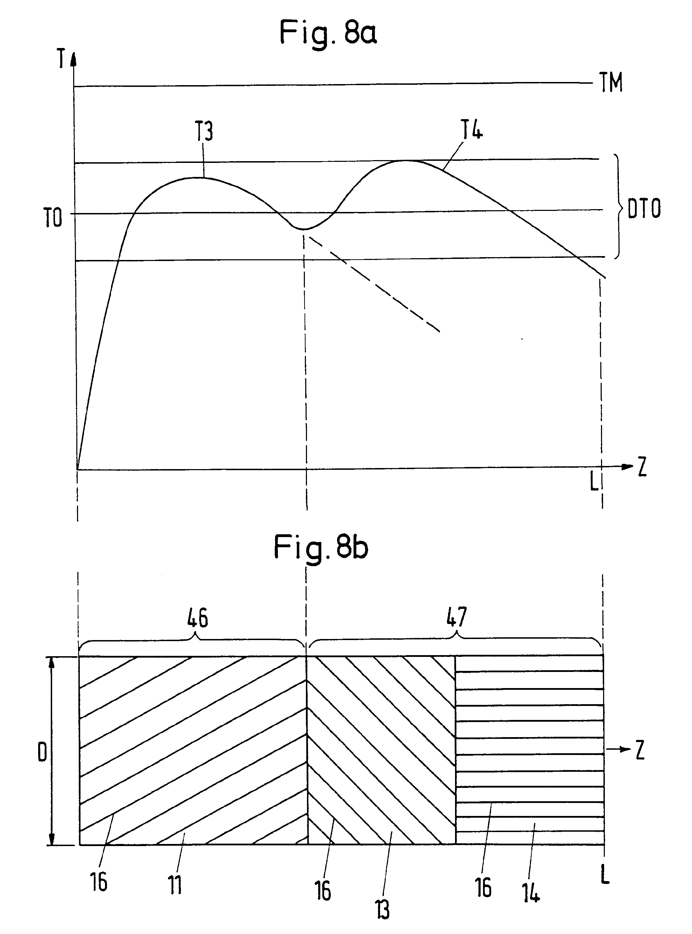

Eine weitere Verbesserung des erfindungsgemässen Reaktors für besonders hohe Effizienz und Selektivität kann durch Aufteilen des Reaktorkörpers in mindestens zwei Abschnitte mit unterschiedlichen Parameterwerten bezüglich Geometrie der Stromleitelemente und Katalysatorbelegung erreicht werden. Dazu zeigt Fig. 8a den Temperaturverlauf T3 und T4 in den beiden Abschnitten 46, 47 des Katalysatorkörpers 7, mit den Stufen 11, 13, 14, von Fig. 8b. Die Parameterwerte sind so eingestellt, dass in der ersten Stufe 46 eine höhere Wärmeableitung und entsprechend ein tieferer Verlauf von T3 erreicht wird. In der zweiten Stufe wird dagegen eine höhere Reaktivität mit entsprechendem Wiederanstieg der Temperatur T4 eingestellt. Damit kann der Temperaturverlauf T3, T4 insgesamt weitgehend nahe der optimalen Temperatur TO bzw. im optimalen Temperaturbereich DTO gehalten und über die Reaktorlänge L somit eine höhere Nutzung des Katalysators und eine bessere Selektivität zugunsten der gewünschten chemischen Reaktion erreicht werden.

Als Beispiel kann somit im Falle von selektiven Oxydationen der Anteil des gewünschten partiell oxidierten Produktes erhöht und der der vollständig oxidierten Produkte (z.B. $CO_2$, $H_2O$) gesenkt werden.

Eine höhere Wärmeableitung wird in der ersten Stufe 46 erreicht durch kleinere Neigungswinkel W, grössere Versetzungsfaktoren H/H0, grössere Kanäle und Querschnittsflächen F2, durch kleinere offene Kreuzungsstellenflächen F1, kleinere Katalysatoroberflächen und -belegungen. Umgekehrt werden entsprechend höhere Reaktivitäten bzw. kleinere Wärmeableitungen in der zweiten Stufe 47 eingestellt.

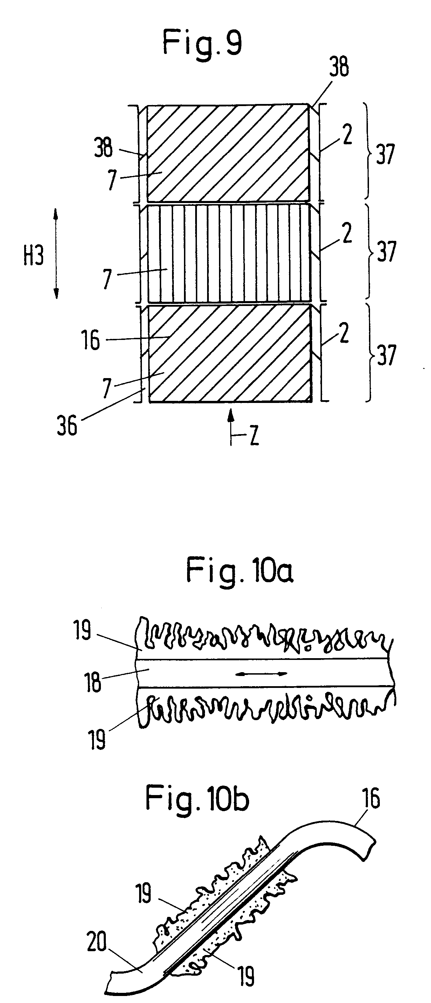

Zum Transport und zur Montage von grösseren Reaktoreinheiten ist es besonders vorteilhaft, den Reaktor gemäss Fig. 9 aus mehreren gleichartigen Moduln 37 zusammenzusetzen. Jeder Modul besteht dabei aus einem Teil des Katalysatorkörpers 7 sowie zugehöriger umgebender Wandung 2. Vorzugsweise beträgt dabei die Höhe H3 eines Moduls nicht mehr als 2.4 m, was einen einfachen Strassentransport zulässt. Der Randspalt 36 ist mindestens am oberen oder unteren Ende jedes Moduls 37 durch einen federnden Kragen 38 verschlossen.

Die Querschnittsform des Reaktors kann rund sein wie Fig. 3a, es können sich aber auch quadratische oder polygonförmige Querschnitte eignen.

Die Teilstromkanäle bildenden Stromleitelemente 16 können als ganzes aus katalytisch wirkendem Material bestehen, sie können mit Katalysatormaterial beschichtet oder an der Oberfläche katalytisch aktiviert sein.

Fig. 10a zeigt ein Stromleitelement 16 mit einem Metallskelett 18 z.B. einem rostfreien Stahlblech und einer Katalysator-Beschichtung 19, wobei der Katalysator mindestens an der Oberfläche angebracht ist. Der Metallträger 18 trägt hier zusätzlich zur Wärmeableitung und zum lokalen Temperaturausgleich bei.

Fig. 10b zeigt ein Stromleitelement, welches aus einer Vollkeramikschicht 20 z.B. aus Kordierit, Mullit, Steatit, Siliziumoxyd und speziell Aluminiumoxyd besteht. Besonders günstige Beschichtungen mit optimierten Oberflächenvergrösserungen auf Metallträgern wie auf Vollkeramikschichten können im Washcoat-Verfahren erzeugt werden.

### Bezeichnungsliste

| | |
|---|---|
| 1 | Reaktor |
| 2 | Reaktorwandung |
| 3 | Einlauf |
| 4 | Auslauf |
| 6 | Fördereinrichtung |
| 7 | Katalysatorkörper (Packung) |
| | |
| 11 | Stufe von 7 (Z,X) |
| 12 | Stufe von 7 (Z,Y) |
| 13, 14 | Stufen von 7 |
| 15 | Kühl- oder Heizvorrichtung |
| 16 | Stromleitelemente |
| 17 | wellenförmige Schichten |
| 18 | Metallskelett |
| 19 | Katalysatorbeschichtung |
| 20 | Vollkeramikschicht |
| 21 | Teilstromkanäle in (Z,X) |
| 21a, b | Strömungsrichtungen von 21 |
| 22 | Teilstromkanäle in (Z,Y) |
| 22a, b | Strömungsrichtungen von 22 |

23           Teilstromkanal, mitte

25           Stromkreuzungsstelle Querschnittsformen von 21, 22

26           dreieckförmig
27           rechteckförmig
28           quadratisch
24, 29       trapezförmig

30           Steuerungseinheit
31           Programmteil
32           Dateneingabe
33           Sensoren

36           Randspalt
37           Module
38           Kragen, federnd
40           Zwischenschichten
41, 42       Lagen
43           Kühlmantel
44           Wärmetauscher
45           Durchtrittsöffnungen von 40
46, 47       Abschnitte

51           Haupt-, Längskomponente
52           Querkomponente
53           Resultierende

B            Teilstück in Lagenebene
(Z,X)        Lagenebenen
(Z,Y)

Z            Hauptströmungsrichtung
W           Neigungswinkel von 21, 22
D            Durchmesser von 7
H            Höhe einer Stufe
$H0 = D \cdot ctg\ W$
H/H0         Versetzungsfaktor
H3           Höhe Modul 37
F1            offene Fläche von 25
F2            Querschnittsfläche von 21, 22
F3            Fläche einer Lagenebene
T            Temperatur
C            Konzentration
L            Länge Katalysatorkörper

T1 alt
T2 neu
T3, T4       T in 46, 47
TM          T maximal
TO          T optimal
DTO        optimaler Bereich
DT1         Temperaturspitzen alt
DT2         Temperaturspitzen neu
C1 alt
C2 neu
C3           Schlupf

## Patentansprüche

1. Reaktor für heterogene Reaktionsführung mit einer Reaktorwandung (2), mindestens einem Einlauf (3) und einem Auslauf (4), einer zugeordneten Fördereinrichtung (6) und mit einem Katalysatorkörper (7) als Packung, wobei der Katalysatorkörper (7) mindestens zwei aufeinanderfolgende Stufen (11, 12) unterschiedlicher Orientierung in zwei verschiedenen Raumebenen (Z, X) und (Z, Y) aufweist, wobei jede Stufe Stromleitelemente (16) aufweist, welche Teilstromkanäle (21, 22) bilden, welche einen Katalysator enthalten und welche abwechselnd in zwei verschiedenen Richtungen jeweils in einem Neigungswinkel W von mindestens 10° zur Hauptstromrichtung (Z) ausgerichtet sind für je zwei Teilströme (21a, 21b) unterschiedlicher Strömungsrichtung, gekennzeichnet durch offene Stromkreuzungsstellen (25) zwischen diesen Teilströmen (21a, 21b), wobei die Summe der offenen Flächen (F1) der Stromkreuzungsstellen einer Lagenebene kleiner ist als die Fläche (F3) dieser Lagenebene, durch einen Versetzungsfaktor H/H0 von mindestens 1/2, wobei H der Höhe einer Stufe (11, 12) entspricht und $H0 = D \cdot ctg\,W$ ist mit D = Durchmesser bzw. Breite des Katalysatorkörpers (7), durch eine Wärme zu- oder ableitende Reaktorwandung (2) und durch einen Randspalt (36) zwischen Katalysatorkörper (7) und Reaktorwandung (2).

2. Reaktor nach Anspruch 1, dadurch gekennzeichnet, dass an der Reaktorwandung (2) eine Kühl- oder Heizvorrichtung (15) vorgesehen ist.

3. Reaktor nach Anspruch 1, dadurch gekennzeichnet, dass der Neigungswinkel W zwischen 35° und 65° liegt.

4. Reaktor nach Anspruch 2, gekennzeichnet durch eine Steuerungseinheit (30), welche verbunden ist mit der Kühl- oder Heizvorrichtung (15) sowie mit der Fördereinrichtung (6).

5. Reaktor nach Anspruch 4, dadurch gekennzeichnet, dass die Steuerungseinheit einen Programmteil (31) mit Dateneingabe (32) und Messeingängen von Sensoren (33), welche im Reaktorraum angebracht sind, aufweist.

6. Reaktor nach Anspruch 1, dadurch gekennzeichnet, dass die offene Fläche (F1) der Stromkreuzungsstellen (25) höchstens das 1.5-fache der Querschnittsfläche (F2) der Teilstromkanäle (21, 22) beträgt.

7. Reaktor nach Anspruch 1, dadurch gekennzeichnet, dass die Summe der offenen Flächen (F1) der Stromkreuzungsstellen einer Lagenebene höchstens das 0.7-fache der Fläche (F3) dieser Lagenebene beträgt.

8. Reaktor nach Anspruch 1, dadurch gekennzeichnet, dass die Stromleitelemente aus wellenförmigen Schichten (17) bestehen, welche in parallelen Lagen (41, 42) angeordnet sind.

9. Reaktor nach Anspruch 1, dadurch gekennzeichnet, dass die Querschnittsformen der Teilkanäle gerundet, dreieckförmig (26), rechteckförmig (27), quadratisch (28) oder trapezförmig (29) ausgebildet sind.

10. Reaktor nach Anspruch 1, dadurch gekennzeichnet, dass sich die Stromleitelemente (16) in den Lagenebenen in einem Teilstück (B) berühren bzw. hier verbunden sind.

11. Reaktor nach Anspruch 1, dadurch gekennzeichnet, dass zwischen dem Katalysatorkörper und der Reaktorwandung ein Randspalt (36) vorgesehen ist, welcher im wesentlichen dem hydraulischen Durchmesser der Teilstromkanäle entspricht.

12. Reaktor nach Anspruch 11, dadurch gekennzeichnet, dass der Randspalt (36) mindestens einmal pro Stufe und in regelmässigen Abständen durch einen Kragen (38) abgedichtet ist.

13. Reaktor nach Anspruch 1, dadurch gekennzeichnet, dass die Stromleitelemente ein Metallskelett (18), vorzugsweise aus rostfreiem Stahl, mit einer Katalysatorbeschichtung (19) aufweisen.

14. Reaktor nach Anspruch 1, dadurch gekennzeichnet, dass die Stromleitelemente eine Beschichtung aus Erdalkali- und/oder Uebergangsmetalloxyden aufweisen.

15. Reaktor nach Anspruch 1, dadurch gekennzeichnet, dass die Stromleitelemente eine Beschichtung aus Aluminiumoxyd Al2O3 aufweisen.

**16.** Reaktor nach Anspruch 1, dadurch gekennzeichnet, dass die Stromleitelemente als Schicht (20) aus Vollkeramik wie z.B. Kordierit, Mullit, Steatit, Aluminiumoxyd oder Siliziumoxyd gebildet werden.

**17.** Reaktor nach Anspruch 13 bis 16, dadurch gekennzeichnet, dass die Stromleitelemente eine Washcoat-Beschichtung mit einem Katalysator aufweisen.

**18.** Reaktor nach Anspruch 1, dadurch gekennzeichnet, dass die katalysatortragende Zone der Stromleitelemente eine spezifische Oberfläche von 20 bis 200 $m^2/g$ aufweisen.

**19.** Reaktor nach Anspruch 1, dadurch gekennzeichnet, dass die Stromleitelemente eine Oberflächenvergrösserung von 100 bis 100 000 $m^2/m^2$ bezogen auf deren geometrische Fläche aufweisen.

**20.** Reaktor nach Anspruch 1, dadurch gekennzeichnet, dass der Reaktorkörper mindestens zwei Abschnitte (46, 47) mit unterschiedlichen Parameterwerten bezüglich der Geometrie der Leitelemente und/oder der Katalysatorbelegung aufweist.

**21.** Reaktor nach Anspruch 1, dadurch gekennzeichnet, dass der Katalysatorkörper (7) mit der umgebenden Wandung (2) aus mehreren gleichartigen Modulen (37) zusammengesetzt ist.

## Claims

**1.** A reactor for heterogeneous reactions and comprising a reactor wall (2), at least one inlet (3) and one outlet (4), an associated conveyor (6) and a catalyst member (7) as packing, the catalyst member (7) having at least two consecutive stages (11, 12) of different orientations from one another in two different physical planes (Z, X) and (Z, Y), each stage having flow-guiding elements (16) bounding subflow ducts (21, 22) which contain a catalyst and which are aligned alternately in two different directions each at an angle of inclination W of at least 10° to the main flow direction (Z) for each two subflows (21a, 21b) of different flow directions, characterised by open flow-crossing places (25) between said sub-flows (21a, 21b), the sum of the open areas (F1) of the flow-crossing places of a layer plane being smaller than the area (S3) of said layer plane, by a displacement factor H/H0 of at least 1.2, H being the height of a stage (11, 12) and H0 = D.cotan W where D = diameter or width of the catalyst member (7), by a reactor wall (2) which supplies or removes heat, and by an edge gap (36) between the catalyst member (7) and the reactor wall (2).

**2.** A reactor according to claim 1, characterised in that cooling or heating means (15) are provided on the reactor wall (2).

**3.** A reactor according to claim 1, characterised in that the angle of inclination W is between 35° and 65°.

**4.** A reactor according to claim 2, characterised by a control unit (30) connected to the cooling or heating means (15) and conveyor (6).

**5.** A reactor according to claim 4, characterised in that the control unit has a program part (31) with data input (32) and measuring inputs of sensors (33) disposed in the reactor chamber.

**6.** A reactor according to claim 1, characterised in that the open area (F1) of the flow-crossing places (25) is not more than 1.5 times the cross-sectional area (F2) of the subflow ducts (21, 22).

**7.** A reactor according to claim 1, characterised in that the sum of the open areas (F1) of the flow-crossing places of one layer plane is not more than 0.7 tyimes the area (F3) of the latter plane.

**8.** A reactor according to claim 1, characterised in that the flow-guiding elements are in the form of wavy layers (17) disposed in parallel layers (41, 42).

**9.** A reactor according to claim 1, characterised in that the subducts can be in cross-section round or triangular (26) or rectangular (27) or square (28) or trapezoidal (29).

**10.** A reactor according to claim 1, characterised in that the flow-guiding elements (16) contact one another or are joined together to form a portion or section (B) in the layer planes.

**11.** A reactor according to claim 1, characterised in that an edge gap (36) is present between the catalyst member and the reactor wall and corresponds substantially to the hydraulic diameter of the subflow ducts.

**12.** A reactor according to claim 11, characterised in that the edge gap (36) is sealed at least once per stage and at regular intervals by a collar (38).

**13.** A reactor according to claim 1, characterised in that the flow-guiding elements have a metal skeleton (18), preferably of rust-free steel, with a catalyst coating (19).

**14.** A reactor according to claim 1, characterised in that the flow-guiding elements have a coating of alkaline earth and/or transition metal oxides.

**15.** A reactor according to claim 1, characterised in that the flow-guiding elements have a coating of aluminium oxide, $Al_2O_3$.

**16.** A reactor according to claim 1, characterised in that the flow-guiding elements are in the form of a layer (20) of solid ceramic such as cordierite, mullite, steatite, aluminium oxide or silicon oxide.

**17.** A reactor according to claims 13 - 16, characterised in that the flow-guiding elements have a washcoat coating with a catalyst.

**18.** A reactor according to claim 1, characterised in that the catalyst-carrying zone of the flow-guiding elements has a specific area of from 20 to 200 $m^2/g$.

**19.** A reactor according to claim 1, characterised in that the flow-guiding elements have an area enlargement of from 100 to 100 000 $m^2/m^2$ referred to their geometric area.

**20.** A reactor according to claim 1, characterised in that the reactor body has at least two parts (46, 47) having different parameter values as regards the geometry of the guiding elements and/or of the catalyst coating.

**21.** A reactor according to claim 1, characterised in that the catalyst member (7) with the surrounding wall (2) is combined from a number of similar modules (37).


**Revendications**

**1.** Réacteur de conduite de réactions hétérogènes, comprenant une cloison (2), au moins une admission (3) et une évacuation (4), un dispositif correspondant de transport (6) et un garnissage formé d'un corps de catalyseur (7), le corps de catalyseur (7) comprenant au moins deux étages successifs (11, 12) ayant des orientations différentes dans deux plans différents (Z, X) et (Z, Y) dans l'espace tridimensionnel, chaque étage comprenant des éléments (16) de guidage de la circulation qui forment des canaux élémentaires (21, 22) qui contiennent un catalyseur et dont chacun est orienté en alternance dans deux directions différentes sous un angle d'inclinaison W d'au moins 10° sur la direction principale de circulation (Z) de manière à produire dans chaque cas deux courants élémentaires (21a, 21b) ayant des directions différentes de circulation, caractérisé par des points ouverts de croisement de la circulation (25) entre ces courants élémentaires (21a, 21b), la somme des surfaces ouvertes (F1) des points de croisement de la circulation dans un plan d'une couche étant plus petite que la surface (F3) de ce plan d'une couche d'une valeur déterminée par un facteur de décalage H/HO d'au moins 1/2, H correspondant à la hauteur d'un étage (11, 12) et HO = D.ctg W, D = diamètre ou largeur du corps de catalyseur (7), par une cloison (2) du réacteur qui apporte ou qui évacue de la chaleur et par un intervalle de bordure (36) entre le corps de catalyseur (7) et la cloison (2) du réacteur.

**2.** Réacteur selon la revendication 1, caractérisé en ce qu'un dispositif de refroidissement ou de chauffage (15) est prévu sur la cloison (2) du réacteur.

**3.** Réacteur selon la revendication 1, caractérisé en ce que l'angle d'inclinaison W est compris entre 35° et 65°.

**4.** Réacteur selon la revendication 2, caractérisé par un groupe de commande (30) qui est raccordé au dispositif de refroidissement ou de chauffage (15) ainsi qu'au dispositif de transport (6).

5. Réacteur selon la revendication 4, caractérisé en ce que le groupe de commande comprend un système de programmation (31) avec entrée des données (32) ainsi que des entrées de mesures de détecteurs (33) qui sont placées dans le volume interne du réacteur.

6. Réacteur selon la revendication 1, caractérisé en ce que la surface ouverte (F1) des points de croisement de la circulation (25) correspond au maximum à 1,5 fois la surface transversale (F2) des canaux élémentaires de la circulation (21, 22).

7. Réacteur selon la revendication 1, caractérisé en ce que la somme des surfaces ouvertes (F1) des points de croisement de la circulation dans un plan d'une couche est au maximum égale à 0,7 fois la surface (F3) de ce plan de la couche.

8. Réacteur selon la revendication 1, caractérisé en ce que les éléments de guidage de la circulation se composent de couches ondulées (17) disposées en couches parallèles (41, 42).

9. Réacteur selon la revendication 1, caractérisé en ce que les formes transversales des canaux élémentaires sont arrondies, triangulaires (26), rectangulaires (27), carrées (28) ou trapézoïdales (29).

10. Réacteur selon la revendication 1, caractérisé en ce que les éléments (16) de guidage de la circulation sont en contact sur un tronçon (B) ou sont reliés sur celui-ci dans les plans des couches.

11. Réacteur selon la revendication 1, caractérisé en ce qu'un intervalle de bordure (36) prévu entre le corps de catalyseur et la cloison du réacteur correspond essentiellement au diamètre hydraulique des canaux élémentaires de la circulation.

12. Réacteur selon la revendication 11, caractérisé en ce que l'intervalle de bordure (36) est fermé de manière étanche au moins une fois par étage et à des distances régulières par une collerette (38).

13. Réacteur selon la revendication 1, caractérisé en ce que les éléments de guidage de la circulation comprennent un squelette métallique (18), de préférence d'acier inoxydable, qui comporte un revêtement catalyseur (19).

14. Réacteur selon la revendication 1, caractérisé en ce que les éléments de guidage de la circulation comportent un revêtement d'oxydes alcalino-terreux et/ou d'un métal de transition.

15. Réacteur selon la revendication 1, caractérisé en ce que les éléments de guidage de la circulation comportent un revêtement d'oxyde d'aluminium $Al_2O_3$.

16. Réacteur selon la revendication 1, caractérisé en ce que les éléments de guidage de la circulation sont formés d'une couche (20) de céramique pleine, par exemple de cordiérite, de mullite, de stéatite, d'oxyde d'aluminium ou d'oxyde de silicium.

17. Réacteur selon les revendications 13 à 16, caractérisé en ce que les éléments de guidage de la circulation comprennent un revêtement formé d'un catalyseur et déposé par badigeonnage.

18. Réacteur selon la revendication 1, caractérisé en ce que la zone des éléments de guidage de la circulation qui porte un catalyseur a une surface spécifique de 20 à 200 $m^2/g$.

19. Réacteur selon la revendication 1, caractérisé en ce que les éléments de guidage de la circulation présentent une augmentation de surface de 100 à 100 000 $m^2/m^2$ par rapport à leur surface géométrique.

20. Réacteur selon la revendication 1, caractérisé en ce que le corps du réacteur comprend au moins deux parties (46, 47) ayant des paramètres différents en ce qui concerne la géométrie des éléments de guidage et/ou du taux d'occupation par le catalyseur.

21. Réacteur selon la revendication 1, caractérisé en ce que le corps du catalyseur (7) ainsi que la cloison (2) qui l'entoure se composent de plusieurs modules semblables (37).

# Fig.1

# Fig. 3a

# Fig.3b

# Fig. 2

$$ctg\ W = HO/D$$

# Fig. 4f

EP 0 433 222 B1

# Fig.4a

F2   25
F3

F1
B
27

# Fig.4b

F2   25
F3
F1
B
28

# Fig.4c

F2   F1
F3
B
29
25

# Fig.5a

F1   F1
F3
25
F1/F3=1/4

# Fig.5b

25
F3
F1
F1/F3=1/4

# Fig.5c

F1   25   F3
F1
F1/F3=9/16

13

Fig. 4d

Fig. 4e

Fig. 4g

Fig. 5g

# Fig. 6

# Fig. 7a

# Fig. 7b

## Fig. 8a

## Fig. 8b

## Fig.9

## Fig.10a

## Fig.10b